# EUROPÄISCHE PATENTSCHRIFT

(11) **EP 2 369 301 B1**
(45) Veröffentlichungstag und Bekanntmachung des Hinweises auf die Patenterteilung: **30.04.2014**
(21) Anmeldenummer: 10003045.1
(22) Anmeldetag: 23.03.2010
(51) Int. Cl.: G01D 3/08

(54) **Sensorbaustein und Verfahren zur Funktionsüberwachung eines solchen**
Sensor component and method for monitoring the function of same
Elément de détection et procédé de surveillance du fonctionnement de celui-ci

(43) Veröffentlichungstag der Anmeldung: 28.09.2011
(73) Patentinhaber: Micronas GmbH, 79108 Freiburg (DE)
(72) Erfinder: Muthers, David, 79111 Freiburg (DE); Bächer, Dieter, 79350 Sexau (DE); Franke, Jörg, 79117 Freiburg (DE)
(74) Vertreter: Koch Müller Patentanwaltsgesellschaft mbH

(56) Entgegenhaltungen:
- EP-B1- 0 962 748
- DE-A1- 10 142 169

## Beschreibung

Die Erfindung betrifft einen Sensorbaustein, der einen Sensor mit einem Sensorausgang zur Ausgabe eines Messsignals für eine physikalische Größe aufweist, wobei der Sensorausgang direkt oder über mindestens eine zur Verarbeitung des Messsignals vorgesehenen Signalverarbeitungsstufe mit einem Ausgangsanschluss verbunden ist. Außerdem betrifft die Erfindung ein Verfahren zur Funktionsüberwachung eines Sensorbausteins, der einen Sensor aufweist, mittels dem ein Messsignal für eine zu erfassende physikalische Größe erzeugt und in unveränderter Form oder - nach Durchführung mindestens eines linearen Signalverarbeitungsschritts und/oder wenigstens eines nichtlinearen Signalverarbeitungsschritts - in verarbeiteter Form an einen Ausgangsanschluss angelegt wird.

Ein derartiger Sensorbaustein ist aus EP 0 962 748 B1 bekannt. Der Sensorbaustein ist als monolithisch integrierte Schaltung ausgebildet, die einen Magnetfeldsensor zur Detektion eines von einem externen Geber erzeugten Magnetfelds, einen Messverstärker und eine Auswerteschaltung aufweist die an interne Messstellen der integrierten Schaltung angeschlossen ist. Die Auswerteschaltung weist einen Modulator zur Modulation des Ausgangsmesssignals auf. Um die in der internen Auswerteschaltung zur Verfügung stehenden Informationen nach außen zu geben, werden die intern erfassten Messwerte als Modulationssignale an den Modulator übergeben, der diese dem digitalen Ausgangsmesssignal überlagert. Mit Hilfe der auf diese Weise nach außen übermittelten Informationen ist es möglich, Rückschlüsse auf den momentanen Arbeitspunkt der Schaltung zu ziehen und Änderungen, die sich in Richtung der Betriebsgrenzen des Sensorbausteins bewegen, rechtzeitig vor dem Auftreten eines Totalausfalls des Sensors festzustellen. Obwohl sich der Sensorbaustein in der Praxis bewährt hat, weist er dennoch Nachteile auf. So ermöglichen die nach außen übermittelten Informationen nur eine begrenzte Überprüfung der Funktionsfähigkeit des Sensorbausteins.

Des Weiteren ist aus der DE 101 42 169 A1 ein Verfahren zum Überwachen einer Sensoreinheit bekannt, bei der ein analoges Prüfsignal ausgewertet wird.

Es besteht deshalb die Aufgabe, ein Verfahren und einen Sensorbaustein der eingangs genannten Art zu schaffen, die auf einfache Weise eine zuverlässige Überprüfung der Funktionsfähigkeit des Sensorbausteins während des Betriebs ermöglichen.

Diese Aufgabe wird bezüglich des Verfahrens dadurch gelöst, dass ein Testsignal erzeugt wird, dessen Spektrum im Wesentlichen außerhalb des Spektrums des Messsignals liegt, dass das Testsignal an einer Stelle in den Sensor eingespeist wird, von der aus es nur bei funktionsfähigem Sensor in unveränderter Form oder - nach Durchführung des mindestens einen linearen Signalverarbeitungsschritts - in verarbeiteter Form zum Ausgangsanschluss gelangt und in einem an diesem anliegenden Ausgangssignal dem unveränderten oder verarbeiteten Messsignal additiv überlagert ist, dass das Ausgangssignal mit dem Testsignal verglichen und ein Diagnosesignal erzeugt wird, das anzeigt, ob das Testsignal in dem Ausgangssignal enthalten ist, und dass aus dem Ausgangssignal das Testsignal herausgefiltert und das verbleibende Signal als Messsignal an einen Messsignalausgang des Sensorbausteins angelegt wird.

Bei dem erfindungsgemäßen Verfahren wird also ein vorbestimmtes Testsignal mit definierten Eigenschaften so an den Sensor angelegt, dass es nur bei funktionsfähigem Sensor zum Ausgangsanschluss gelangt. Es wird überprüft, ob das Testsignal zum Ausgang des Sensors weitergeleitet wird und der Sensor somit funktionsfähig ist. Dadurch kann der gesamte Signalweg des Sensors auf einfache Weise überprüft werden. Da das Testsignal aus dem Ausgangssignal herausgefiltert wird, kann die Funktionsüberprüfung während des Messens der physikalischen Größe durchgeführt werden. Das Testsignal kann auch in Form der zu messenden physikalischen Größe an den Sensor angelegt werden. So kann beispielsweise bei einem Sensorbaustein, der einen Magnetfeldsensor aufweist als Testsignal ein magnetisches Wechselfeld mittels einer in den Sensorbaustein integrierten Spule dem zu messenden Magnetfeld überlagert werden, um die Funktion des Sensorbausteins zu überprüfen.

Bei einer bevorzugten Ausführungsform der Erfindung sind das Messsignal und das Testsignal analoge Signale, die vorzugsweise durch Sigma-Delta-Modulation in ein digitales Ausgangssignal konvertiert werden, wobei ein dem analogen Testsignal entsprechendes digitales Testsignal bereitgestellt und mit dem digitalen Ausgangssignal korreliert wird, und wobei in Abhängigkeit von dem Ergebnis der Korrelation das Diagnosesignal erzeugt wird. Dabei kann das Diagnosesignal dadurch erzeugt werden, dass ein durch Korrelation des Testsignals mit dem digitalen Ausgangssignal erzeugtes Korrelaflonssignal mit einem konstanten Schwellwert verglichen wird. Das Verfahren kann dann auf einfache Weise in einen Sensorbaustein implementiert werden, der eine digitale Signalverarbeitungseinrichtung aufweist.

Bei einer vorteilhaften Ausgestaltung der Erfindung wird das Testsignal durch Dezimationsfilterung aus dem Ausgangssignal entfernt, wobei die Übertragungsfunktion der Dezimationsfilterung Nullstellen aufweist, und wobei das Spektrum des analogen Testsignals lokale Maxima aufweist, die mit den Nullstellen übereinstimmen. Ein in dem Sensorbaustein vorhandener Dezimationsfilter kann dann zum Herausfiltern des Testsignals aus dem Ausgangssignal genutzt werden. Somit wird ein zusätzlicher Digitalfilter eingespart.

Das analoge Testsignal ist vorzugsweise ein Rechtecksignal. Das Spektrum des Testsignals weist dann in konstanten Abständen zueinander angeordnete nadelförmige Impulse auf, die so angeordnet sein können, dass sie mit den Nullstellen der Übertragungsfunktion des Dezimationsfilters übereinstimmen können.

Bei einer bevorzugten Ausführungsform der Erfindung wird das Testsignal an einer Stelle in den Sensor eingespeist, von der aus es nur bei funktionsfähigem Sensor zu einem Sensorausgang gelangt und in einem an diesem anliegenden Sensorsignal dem Messsignal additiv überlagert ist, wobei das Testsignal aus dem so erhaltenen Sensorsignal entfernt und mit dem verbleibenden Signal der wenigstens eine nichtlineare Signalverarbeitungsschritt durchgeführt wird, um das Messsignal in der verarbeiteten Form bereitzustellen, wobei das Testsignal dem so erhaltenen, verarbeiteten Messsignal additiv überlagert wird und das auf diese Weise gebildete Überlagerungssignal an den Ausgangsanschluss angelegt wird. Der nichtlineare Signalverarbeitungsschritt wird also nicht auf das Testsignal angewendet, damit dieses auf einfache Weise aus dem Ausgangssignal entfernt werden kann. Dadurch ist es trotz des nichtlinearen Signalverarbeitungsschritts möglich, die Funktion wesentlicher Teile des Sensorbausteins zu überwachen.

Bei Bedarf kann der wenigstens eine nichtlineare Signalverarbeitungsschrüt eine trigonometrische Operation, insbesondere eine Arcustangensoperation umfassen. Am Messsignalausgang kann dann ein Winkelsignal ausgegeben werden, welches des Winkel zwischen dem Magnetfeld und einer Mess- oder Bezugsachse des Sensors anzeigt.

Der Sensor weist bevorzugt einen für die physikalische Größe empfindlichen Sensorbereich auf, an dem als Messsignal eine von der physikalischen Größe abhängige elektrische Spannung anliegt, wobei das Testsignal ein elektrischer Strom ist, der derart in den Sensor eingespeist wird, dass er an dem Sensorbereich einen Spannungsabfall hervorruft. Das Testsignal kann dadurch auf einfache Weise so in den Sensor injiziert werden, dass es den gesamten Signalweg vom Sensorbereich bis zum Ausgangsanschluss durchläuft.

Die physikalische Größe ist bevorzugt ein Magnetfeld. Das erfindungsgemäße Verfahren kann aber auch bei der Messung anderer physikalischer Größen zur Anwendung kommen, insbesondere bei der Messung einer Gaskonzentration, eines Drucks, eines Drehwinkels und/oder einer Position.

Bezüglich des Sensorbausteins der eingangs genannten Art wird die vorstehend genannte Aufgabe dadurch gelöst, dass der Sensorbaustein einen Testsignalgenerator zum Erzeugen eines Testsignals hat, dessen Spektrum im Wesentlichen außerhalb des Spektrums des Messsignals liegt, dass der Testsignalgenerator derart mit dem Sensor gekoppelt ist, dass das Testsignal nur bei funkfionsfähigem Sensor zum Ausgangsanschluss gelangt und dort dem Messsignal oder dem verarbeiteten Messsignal additiv überlagert ist, dass mit dem Ausgangsanschluss eine Diagnoseeinrichtung verbunden ist, die Mittel zum Erzeugen eines Diagnosesignals aufweist das anzeigt, ob das Testsignal am Ausgangsanschluss anliegt, und dass der Ausgangsanschluss über einen das Testsignal sperrenden Filter mit einem Messsignalausgang des Sensorbausteins verbunden ist.

Der Sensorbaustein ist bevorzugt als monolithisch integrierte Schaltung ausgebildet, die einen mit dem Messsignalausgang verbundenen ersten Außenanschluss und einen zweiten Außenanschluss zur Ausgabe des Diagnosesignals aufweist. Mit Hilfe des Diagnosesignals kann die Funktionsfähigkeit oder Nichtfünktionsfühigkeit des Sensors und ggf. weiterer in dem Sensorbaustein enthaltener Komponenten auf einfache Weise von außen überprüft werden. Das Diagnosesignal ist vorzugsweise ein Digitalsignal. Das Diagnosesignal kann auch über einen Stromversorgungsanschluss des Sensorbausteins nach außen übertragen werden, indem es dem Versorgungsstrom und/oder der Versorgungsspannung aufmoduliert wird. Dadurch kann ein Außenanschluss eingespart werden.

Bei einer vorteilhaften Ausgestaltung der Erfindung weist der Sensor einen Analogausgang für das Messsignal auf und der Testsignalgenerator ist zum Erzeugen eines analogen Testsignals ausgestaltet, wobei der Analogausgang über einen Analog-Digital-Konverter, insbesondere einen Sigma-Delta-Konverter, mit dem Ausgangsanschluss verbunden ist, wobei die Diagnoseeinrichtung einen digitalen Testsignalgenerator zum Erzeugen eines dem analogen Testsignal entsprechenden digitalen Testsignals und eine Korrelationseinrichtung aufweist, die mit einem ersten Korrelationseingang mit einem Konverterausgang des Analog-Digital-Konverters und mit einem zweiten Korrelationseingang mit dem digitalen Testsignalgenerator verbunden ist. Dabei kann in den Sensorbaustein eine digitale Signalverarbeitungseinrichtung mit einem Mikroprozessor integriert sein, auf dem die für die Diagnoseeinrichtung erforderlichen Operationen in Form eines Betriebsprogramms ablaufen.

Vorteilhaft ist, wenn die Diagnoseeinrichtung einen Komparator aufweist, der zum Erzeugen eines Diagnosesignals mit einem ersten Komparatoreingang mit einem Ausgang der Korrelationseinrichtung und mit einem zweiten Komparatoreingang mit einem Referenzwertgeber für ein konstantes Referenzsignal verbunden ist.

Bei einer bevorzugten Ausführungsform der Erfindung ist der Filter als Dezimationsfilter ausgestaltet, dessen Übertragungsfunktion Nullstellen aufweist, wobei das Spektrum des analogen Testsignals lokale Maxima hat, die mit den Nullstellen übereinstimmen. Der Dezimationsfilter erfüllt dann eine Doppelfunktion, bei der er außer als Dezimationsfilter auch zum Herausfiltern des Testsignals aus dem digitalen Ausgangssignal des Analog-Digital-Konverters genutzt wird.

Bei einer vorteilhaften Ausführungsform der Erfindung ist der der Sensorausgang direkt oder über eine lineare Signalverarbeitungsstufe mit einem ersten Eingang eines Subtraktionsglieds verbunden, wobei ein zweiter Eingang des Subtraktionsglieds an einem Anschluss für das Testsignal angeschlossen ist, wobei ein Ausgang des Subtraktionsglieds über eine nichtlineare Signalverarbeitungsstufe mit einem ersten Eingang eines Addierglieds verbunden ist, wobei ein zweiter Eingang des Addierglieds mit dem Anschluss für das Testsignal verbunden ist, und wobei der Ausgang des Addierglieds den Ausgangsanschluss bildet oder über eine weitere Signalverarbeitungsstufe mit diesem verbunden ist. Das Testsignal wird also nicht über die nichtlineare Signalverarbeitungsstufe geleitet und es wird erst hinter der nichtlinearen Signalverarbeitungsstufe zu deren Ausgangssignal hinzuaddiert. Dadurch ist es trotz des nichtlinearen Signalverarbeitungsschritts möglich, die Funktion wesentlicher Komponenten des Sensorbausteins zu überwachen.

Die nichtlineare Signalverarbeitungsstufe ist bevorzugt zur Durchführung einer trigonometrischen Operation ausgestaltet, insbesondere zur Durchführung einer Arcustangensoperation. Am Messsignalausgang kann dann ein Winkelsignal ausgegeben werden, welches des Winkel zwischen dem Magnetfeld und einer Mess- oder Bezugsachse des Sensors anzeigt.

Wenn der Testsignalgenerator ein Rechtecksignalgenerator ist, stimmen die Maxima des Spektrums des Testsignals besonders gut mit den Nullstellen der Übertragungsfunktion des Dezimationsfilters überein.

Bei einer zweckmäßigen Ausgestaltung der Erfindung ist der Testsignalgenerator als Stromquelle ausgestaltet, wobei der Sensor einen für die physikalische Größe empfindlichen Sensorbereich hat, wobei dieser Sensorbereich einen elektrischen Widerstand aufweist, und wobei der Sensorbereich mit dem Testsignalgenerator in einen Stromkreis geschaltet ist. Das Testsignal kann dann auf einfache Weise so in den Sensor eingespeist werden, dass es nur bei funktionsfähigem Sensor zum Ausgangsanschluss gelangt.

Vorteilhaft ist, wenn der Sensor ein Magnetfeldsensor ist und eine Hallplatte aufweist, die zumindest einen ersten Anschlusskontakt, einen zweiten Anschlusskontakt, einen dritten Anschlusskontakt und einen vierten Anschlusskontakt aufweist, die voneinander beabstandet sind, wenn der erste Anschlusskontakt und der dritte Anschlusskontakt zum Einspeisen eines Messstroms in die Hallplatte mit einer Messstromquelle verbunden sind, und wenn der zweite Anschlusskontakt und der vierte Anschlusskontakt zum Abgreifen einer quer zu dem Messstroms ausgerichteten Hallspannung mit einem Spannungsmesser und zum Anlegen des Testsignals mit Testsignalanschlüssen des analogen Testsignalgenerators verbunden sind. Das Testsignal überlagert sich dann in Form einer elektrischen Spannung der bei Anwesenheit eines die Hallplatte durchsetzenden magnetischen Flusses zwischen dem zweiten und vierten Anschlusskontakt anliegenden Hallspannung.

Nachfolgend ist ein Ausführungsbeispiel der Erfindung anhand der Zeichnung näher erläutert. Es zeigt:
- Fig. 1: ein Blockschaltbild einer elektrischen Schaltung eines Sensorbausteins, die in einen Halbleiterchip eines Sensorbausteins integriert ist,
- Eig. 2: eine Teildarstellung der elektrischen Schaltung, welche eine Hallplatte zeigt, an der eine Messstromquelle und eine Testsignal-Stromquelle angeschlossen sind,
- Fig. 3: eine graphische Darstellung der Übertragungsfunktion eines Dezimationsfilters, wobei auf der Abszisse die Frequenz in Herz und auf der Ordinate die Verstärkung in Dezibel aufgetragen ist, und
- Fig.4: ein Blockschaltbild eines Sensorbausteins, der eine lineare und eine nichtlineare Signalverarbeitungsstufe aufweist.

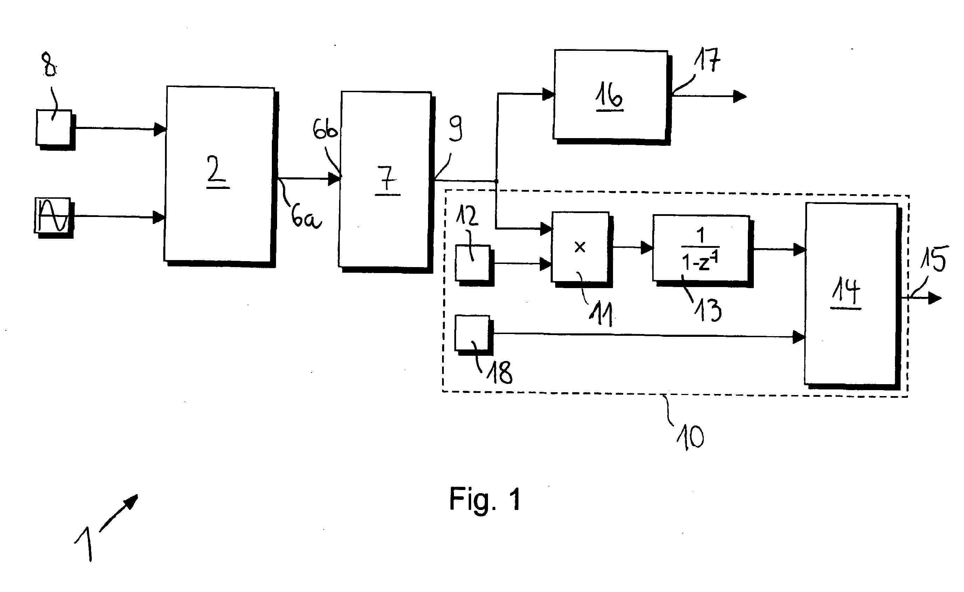

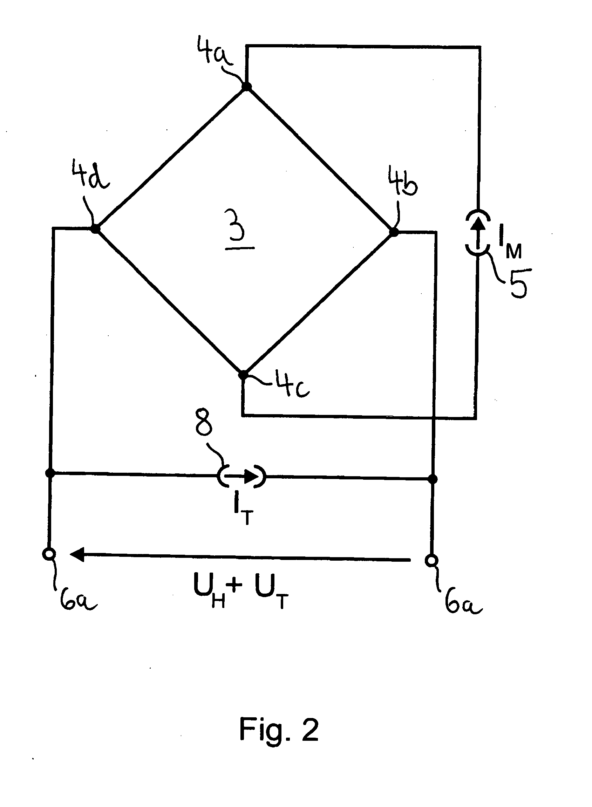

Ein in Fig. 1 im Ganzen mit 1 bezeichneter Sensorbaustein weist einen Halbleiterchip auf, in dessen Substrat ein Sensor 2 zur Messung einer magnetischen Flussdichte monolithisch integriert ist. Wie in Fig. 2 erkennbar ist, hat der Sensor 2 eine Hallplatte 3, die einen ersten Anschlusskontakt 4a, einen zweiten Anschlusskontakt 4b, einen dritten Anschlusskontakt 4c und einen vierten Anschlusskontakt 4d aufweist.

Der erste und dritte Anschlusskontakt 4a, 4c sind in einer ersten, in der Ebene der Hallplatte 3 verlaufenden Richtung und der zweite und vierte Anschlusskontakt 4b, 4d in einer zweiten, in der Ebene der Hallplatte 3 rechtwinklig zur ersten Richtung verlaufenden Richtung voneinander beabstandet. Die Anschlusskontakte 4a, 4b, 4c, 4d sind in an sich bekannter Weise mit einer in das Substrat integrierten Ansteuereinrichtung verbunden, von der in Fig. 2 aus Gründen der Übersichtlichkeit nur eine Messstromquelle 5 dargestellt ist. Mit Hilfe der Messstromquelle 5 wird ein konstanter elektrischer Strom I_{M} in die Hallplatte 3 eingespeist. Ein erster Anschluss der Messstromquelle 5 ist dazu mit dem ersten Anschlusskontakt 4a und ein zweiter Anschluss der Messstromquelle 5 mit dem dritten Anschlusskontakt 4c der Messstromquelle 5 verbunden.

Die Hallplatte 3 wird normal zu ihrer Plattenebene von einem zu messenden magnetischen Fluss durchsetzt, in welchem der durch die Hallplatte 3 fließende elektrische Strom I_{M} abgelenkt wird. Durch die Ablenkung ergibt sich in der Hallplatte 3 ein elektrisches Feld, das in Form eine Hallspannung U_{H} zwischen dem zweiten und vierten Anschlusskontakt 4b, 4d messbar ist.

In Fig. 1 ist erkennbar, dass ein die Hallspannung führende Sensorausgang 6a mit einem Analogeingang 6b eines Analog-Digital-Konverters 7 verbunden ist. Dieser ist als Sigma-Delta-Konverter ausgestaltet.

Zum Überprüfen der Funktionsfähigkeit des Sensors 2 hat der Sensorbaustein 1 einen Testsignalgenerator 8, der ein analoges Testsignal bereitstellt, dessen Spektrum im Wesentlichen außerhalb des Spektrums des Messsignals liegt. Der Testsignalgenerator 8 ist als Stromquelle ausgestaltet, die einen ersten Stromquellenanschluss und einen zweiten Stromquellenanschluss aufweist. Das Testsignal ist ein reines Wechselstromsignal, dessen Gleichstromanteil gleich Null ist.

Der erste Stromquellenanschluss ist mit dem zweiten Anschlusskontakt 4b und der zweite Stromquellenanschluss mit dem vierten Anschlusskontakt 4d der Hallplatte 3 verbunden. Der von dem Testsignalgenerator 8 erzeugte Strom verursacht am ohmschen Widerstand der Hallplatte 3 einen Spannungsabfall U_{T}, der sich der Hallspannung U_{H} additiv überlagert. Das entsprechende Summensignal U_{T} + U_{H} ist zwischen dem zweiten und vierten Anschlusskontakt 4b, 4d der Hallpaltte 3 abgreifbar. Das Summensignal wird mit Hilfe des Analog-Digital-Konverters 7 in ein Digitalsignal konvertiert und an einen Ausgangsanschluss 9 des Analog-Digital-Konverters 7 ausgegeben.

Wenn der von dem einen Anschluss des Analogeingangs 6b über den zweiten Anschlusskontakt 4b, die Hallplatte 3 und den vierten Anschlusskontakt 4d zu dem anderen Anschluss des Analogeingangs 6b führende Signalpfad aufgrund eines Defekts gestört ist, gelangt das Testsignal nicht oder nur in veränderter Form zum Analogeingang 6b und zum Ausgangsanschluss 9. Auch beim Auftreten eines Defekts am Analog-Digital-Konverters 7 wird das Testsignal nicht mehr fehlerfrei zum Ausgangsanschluss 9 weitergeleitet. Der Testsignalgenerator ist also derart mit dem Sensor 2 gekoppelt, dass es nur bei funktionsfähigem Sensor 2 zum Ausgangsanschluss 9 gelangt.

Zum Überprüfen der Funktionsfähigkeit des Sensors 2 ist der digitale Ausgangsanschluss 9 mit einer Diagnoseeinrichtung 10 verbunden, die eine Korrelationseinrichtung 11 und einen digitalen Testsignalgenerator 12 aufweist. Der Testsignalgenerator 12 stellt an seinem Ausgang ein dem analogen Testsignal entsprechendes und zu diesem synchrones digitales Testsignal bereit.

Ein erster Korrelationseingang der Korrelationseinrichtung 11 ist mit dem Ausgangsanschluss 9 des Analog-Digital-Konverters 7 und ein zweiter Korrelationseingang ist mit dem Ausgang des digitalen Testsignalgenerators 12 verbunden. Der Ausgang der Korrelationseinrichtung 11 ist über einen Integrator 13 oder ein Tiefpassfilter mit einem ersten Eingang eines Komparators 14 verbunden. Ein zweiter Eingang des Komparators 14 ist mit einem Referenzwertgeber 18 verbunden, der ein konstantes Referenzsignal bereitstellt. An einem Ausgang des Komparators 14 wird ein Diagnosesignal bereitgestellt, dass anzeigt, ob das Testsignal am Ausgangsanschluss 9 detektiert wurde und der Sensor 2 somit funktionsfähig ist.

Die Korrelationseinrichtung 11, der Testsignalgenerator 12, der Integrator 13 und der Komparator 14 können als Betriebsprogramm in einen Mikrocomputer implantiert sein, der monolithisch in den Halbleiterchip des Sensorbausteins 1 integriert ist. Die Korrelationseinrichtung 11, der Testsignalgenerator 12, der Integrator 13 und der Komparator 14 können aber auch außerhalb des Halbleiterchips angeordnet sein.

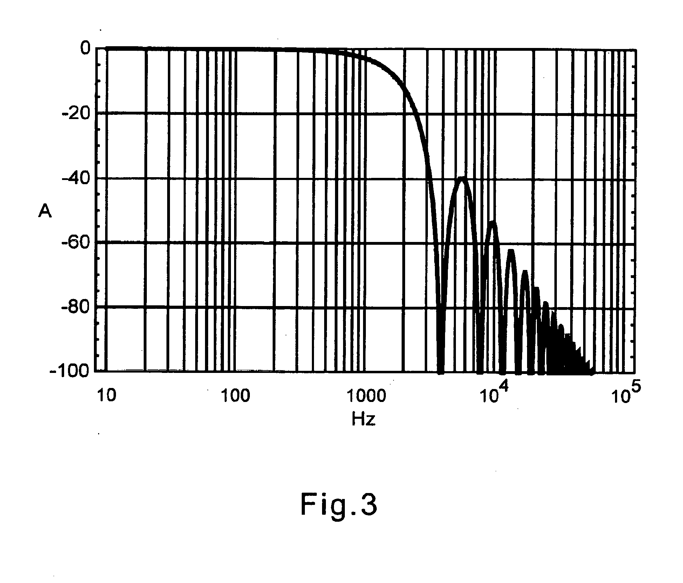

In Fig. 1 ist erkennbar, dass der Ausgangsanschluss 9 über einen Dezimationsfilter 16 mit einem Messsignalausgang 17 des Sensorbausteins 1 verbunden ist. Fig. 3 zeigt die Übertragungsfunktion des Dezimationsfilters 16. Deutlich ist erkennbar, dass die Übertragungsfunktion bis zum Erreichen einer Grenzfrequenz einen im Wesentlichen konstanten Verlauf aufweist, und dass oberhalb der Grenzfrequenz mehrere Nullstellen vorhanden sind. Das Spektrum des analogen Testsignal weist eine Anzahl von impulsförmigen Bereichen auf, an denen das Spektrum lokale Maxima hat. Das analoge Testsignal ist derart an die Übertragungsfunktion des Dezimationsfilters 16 angepasst, dass die lokalen Maxima des Testsignal-Spektrums mit den Nullstellen der Übertragungsfunktion übereinstimmen. Das Testsignal wird also in dem Dezimationsfilters 16 unterdrückt, so dass nur das der Hallspannung U_{H} entsprechende Messsignal in digitaler Form am Messsignalausgang anliegt. Dadurch kann der Sensor 2 während des laufenden Betriebs auf Funktionsfähigkeit überprüft werden.

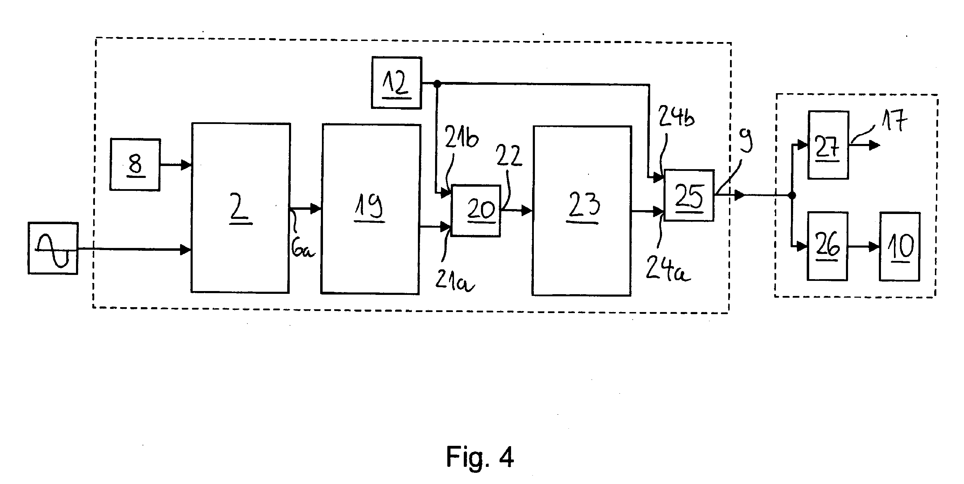

Bei dem in Fig. 4 gezeigten Ausführungsbeispiel weist der Sensorbaustein 1 einen Halbleiterchip auf, in dessen Substrat ein Sensor 2 zur Messung einer magnetischen Flussdichte monolithisch integriert ist. Der Sensor 2 entspricht dem in Fig. 1 und 2 abgebildeten Sensor 2. Der Sensor 2 hat einen analogen Sensorausgang 6a, an dem ein Sensorausgangssignal anliegt, in dem das analoge Testsignal dem analogen Messsignal additiv überlagert ist.

Der Sensorausgang 6a ist mit einem in Fig. 4 nicht näher dargestellten Analogeingang eines Analog-Digital-Konverters verbunden, der einer linearen Signalverarbeitungsstufe 19 zugeordnet ist. Die Signalverarbeitungsstufe 19 kann zusätzlich zu dem Analog-Digital-Konverter Mittel zum Kalibrieren und/oder Linearisieren des Messsignals aufweisen.

Ein Digitalausgang der Signalverarbeitungsstufe 19 ist mit einem ersten Eingang 21 a eines Subtraktionsglieds 20 verbunden. Ein zweiter Eingang 21 b des Subtraktionsglieds 20 ist am Ausgang eines digitalen Testsignalgenerators 12 angeschlossen, der an den zweiten Eingang 21 b ein dem analogen Testsignal entsprechendes und zu diesem synchrones digitales Testsignal anlegt. Am Ausgang 22 des Subtraktionsglieds 20 liegt bei funktionsfähigem Sensorbaustein 1 das linear verarbeitete Messsignal an.

Der Ausgang 22 des Subtraktionsglieds 20 ist über eine nichtlineare Signalverarbeitungsstufe mit einem ersten Eingang 24a eines Addierglieds 25 verbunden. Die Signalverarbeitungsstufe umfasst ein Rechenwerk zum Erzeugen eines nichtlinear verarbeiteten Messsignals, welches dem Arcustangens des linear verarbeiteten Messsignals entspricht.

Ein zweiter Eingang 24b des Addierglieds 25 mit dem Ausgang des digitalen Testsignalgenerators 12 verbunden. Der Ausgang des Addierglieds 25 bildet den Ausgangsanschluss 9, an dem ein digitales Ausgangssignal anliegt, welches der Summe aus dem verarbeiteten Messsignal und dem Testsignal entspricht.

Der Ausgangsanschluss 9 ist über einen Hochpassfilter 26 mit einer Diagnoseeinrichtung 10 verbunden ist, die Mittel zum Erzeugen eines Diagnosesignals aufweist, das anzeigt, ob das Testsignal am Ausgangsanschluss 9 anliegt. Außerdem ist der Ausgangsanschluss 9 über ein Tiefpassfilter 27, der das Testsignal sperrt und das verarbeitete Messsignal durchlässt, mit dem Messsignalausgang 17 verbunden.

Der Hochpassfilter 26, der Tiefpassfilter 27 und die Diagnoseeinrichtung 10 können außerhalb des Halbleiterchips angeordnet sein.

## Patentansprüche

1. Verfahren zur Funktionsüberwachung eines Sensorbausteins (1), der einen Sensor (2) aufweist, mittels dem ein Messsignal für eine zu erfassende physikalische Größe erzeugt und in unveränderter Form oder - nach Durchführung mindestens eines linearen Signalverarbeitungsschritts und/oder wenigstens eines nichtlinearen Signalverarbeitungsschritts - in verarbeiteter Form an einen Ausgangsanschluss (9) angelegt wird, **dadurch gekennzeichnet, dass** ein Testsignal erzeugt wird, dessen Spektrum im Wesentlichen außerhalb des Spektrums des Messsignals liegt, dass das Testsignal an einer Stelle in den Sensor (2) eingespeist wird, von der aus es nur bei funktionsfähigem Sensor (2) in unveränderter Form oder - nach Durchführung des mindestens einen linearen Signalverarbeitungsschritts - in verarbeiteter Form zum Ausgangsanschluss (9) gelangt und in einem an diesem anliegenden Ausgangssignal dem unveränderten oder verarbeiteten Messsignal additiv überlagert ist, dass das Ausgangssignal mit dem Testsignal verglichen und ein Diagnosesignal erzeugt wird, das anzeigt, ob das Testsignal in dem Ausgangssignal enthalten ist, und dass aus dem Ausgangssignal das Testsignal herausgefiltert und das verbleibende Signal als Messsignal an einen Messsignalausgang (17) des Sensorbausteins (1) angelegt wird.

2. Verfahren nach Anspruch 1, **dadurch gekennzeichnet, dass** das Messsignal und das Testsignal analoge Signale sind, die vorzugsweise durch SigmaDelta-Modulation in ein digitales Ausgangssignal konvertiert werden, das ein dem analogen Testsignal entsprechendes digitales Testsignal bereitgestellt und mit dem digitalen Ausgangssignal korreliert wird, und dass in Abhängigkeit von dem Ergebnis der Korrelation das Diagnosesignal erzeugt wird.

3. Verfahren nach Anspruch 2, **dadurch gekennzeichnet, dass** das Testsignal durch Dezimationsfilterung aus dem Ausgangssignal entfernt wird, dass die Übertragungsfunktion der Dezimationsfilterung Nullstellen aulweist, und dass das Spektrum des analogen Testsignals lokale Maxima aufweist, die mit den Nullstellen übereinstimmen.

4. Verfahren nach einem der Ansprüche 1 bis 3, **dadurch gekennzeichnet, dass** das analoge Testsignal ein Rechtecksignal ist.

5. Verfahren nach einem der Ansprüche 1 bis 4, **dadurch gekennzeichnet, dass** das Testsignal an einer Stelle in den Sensor (2) eingespeist wird, von der aus es nur bei funktionsfähigem Sensor (2) zu einem Sensorausgang (6a) gelangt und in einem an diesem anliegenden Sensorsignal dem Messsignal additiv überlagert ist, dass das Testsignal aus dem so erhaltenen Sensorsignal entfernt und mit dem verbleibenden Signal der wenigstens eine nichflineare Signalverarbeitungsschritt durchgeführt wird, um das Messsignal in der verarbeiteten Form bereitzustellen, dass das Testsignal dem so erhaltenen, verarbeiteten Messsignal additiv überlagert wird und das das auf diese Weise gebildete Überlagerungssignal an den Ausgangsanschluss (9) angelegt wird.

6. Verfahren nach einem der Ansprüche 1 bis 5 , **dadurch gekennzeichnet, dass** der wenigstens eine nichtlineare Signalverarbeitungsschritt eine trigonometrische Operation, insbesondere eine Arcustangensoperation umfasst.

7. Verfahren nach einem der Ansprüche 1 bis 6, **dadurch gekennzeichnet, dass** der Sensor (2) einen für die physikalische Größe empfindlichen Sensorbereich aufweist, an dem als Messsignal eine von der physikalischen 6röße abhängige elektrische Spannung anliegt, und dass das Testsignal ein elektrischer Strom ist, der derart in den Sensor (2) eingespeist wird, dass er an dem Sensorbereich einen Spannungsabfall hervorruft.

8. Verfahren nach einem der Ansprüche 1 bis 7, **dadurch gekennzeichnet, dass** die physikalische Größe ein Magnetfeld ist.

9. Sensorbaustein (1), der einen Sensor (2) mit einem Sensorausgang (6a) zur Ausgabe eines Messsignals für eine physikalische Größe aufweist, wobei der Sensorausgang (6a) direkt oder über mindestens eine zur Verarbeitung des Messsignals vorgesehenen Signalverarbeitungsstufe mit einem Ausgangsanschluss (9) verbunden ist, **dadurch gekennzeichnet, dass** der Sensorbaustein (1) einen Testsignalgenerator (8) zum Erzeugen eines Testsignals hat, dessen Spektrum im Wesentlichen außerhalb des Spektrums des Messsignals liegt, dass der Testsignalgenerator (8) derart mit dem Sensor (2) gekoppelt ist, dass das Testsignal nur bei funktionsfähigem Sensor (2) zum Ausgangsanschluss (9) gelangt und dort dem Messsignal oder dem verarbeiteten Messsignal additiv überlagert ist, dass mit dem Ausgangsanschluss (9) eine Diagnoseeinrichtung (10) verbunden ist, die Mittel zum Erzeugen eines Diagnosesignals aufweist, das anzeigt, ob das Testsignal am Ausgangsanschluss (9) anliegt, und dass der Ausgangsanschluss (9) über einen das Testsignal sperrenden Filter mit einem Messsignalausgang (17) des Sensorbausteins (1) verbunden ist.

10. Sensorbaustein (1) nach Anspruch 9, **dadurch gekennzeichnet, dass** der Sensorausgang (6a) zur Ausgabe eines analogen Sensorausgangssignals und der Testsignalgenerator (8) zum Erzeugen eines analogen Testsignals ausgestaltet ist, dass der Sensorausgang (6a) über einen Analog-Digital-Konverter (7), insbesondere einen Sigma-Delta-Konverter, mit dem Ausgangsanschluss (9) verbunden ist, dass die Diagnoseeinrichtung (10) einen digitalen Testsignalgenerator (12) zum Erzeugen eines dem analogen Testsignal entsprechenden digitalen Testsignals und eine Korrelationseinrichtung (11) aufweist, die mit einem ersten Korrelationseingang mit einem Konverterausgang des Analog-Digital-Konverters (7) und mit einem zweiten Korrelationseingang mit dem digitalen Testsignalgenerator (12) verbunden ist.

11. Sensorbaustein (1) nach Anspruch 10, **dadurch gekennzeichnet, dass** die Diagnoseeinrichtung (10) einen Komparator (14) aufweist, der zum Erzeugen eines Diagnosesignals mit einem ersten Komparatoreingang mit einem Ausgang der Korrelationseinrichtung (11) und mit einem zweiten Komparatoreingang mit einem Referenzwertgeber (18) für ein konstantes Referenzsignal verbunden ist.

12. Sensorbaustein (1) nach Anspruch 10 oder 11, **dadurch gekennzeichnet, dass** der Filter als Dezimationsfilter (16) ausgestaltet ist, dessen Übertragungsfunktion Nullstellen aufweist, und dass das Spektrum des analogen Testsignals lokale Maxima hat, die mit den Nullstellen übereinstimmen.

13. Sensorbaustein (1) nach einem der Ansprüche 9 bis 12, **dadurch gekennzeichnet, dass** der Sensorausgang (6a) direkt oder über eine lineare Signalverarbeitungsstufe (19) mit einem ersten Eingang (21 a) eines Subtraktionsglieds (20) verbunden ist, dass ein zweiter Eingang (21 b) des Subtraktionsglieds (20) an einem Anschluss für das Testsignal angeschlossen ist, dass ein Ausgang (22) des Subtrakfionsglieds (20) über eine nichtlineare Signalverarbeitungsstufe (23) mit einem ersten Eingang (24a) eines Addierglieds (25) verbunden ist, dass ein zweiter Eingang (24b) des Addierglieds (25) mit dem Anschluss für das Testsignal verbunden ist, und dass der Ausgang des Addierglieds (25) den Ausgangsanschluss (9) bildet oder über eine weitere Signalverarbeitungsstufe mit diesem verbunden ist.

14. Sensorbaustein (1) nach einem der Ansprüche 9 bis 13, **dadurch gekennzeichnet, dass** die nichtlineare Signalverarbeitungsstufe (23) zur Durchführung einer trigonometrischen Operation ausgestaltet ist, insbesondere zur Durchführung einer Arcustangensoperation.

15. Sensorbaustein (1) nach einem der Ansprüche 9 bis 14, **dadurch gekennzeichnet, dass** der Testsignalgenerator (8) ein Rechtecksignalgenerator ist.

16. Sensorbaustein (1) nach einem der Ansprüche 9 bis 15, **dadurch gekennzeichnet, dass** der Testsignalgenerator (8) als Stromquelle ausgestaltet ist, dass der Sensor (2) einen für die physikalische Größe empfindlichen Sensorbereich hat, dass dieser Sensorbereich einen elektrischen Widerstand aufweist, und dass der Sensorbereich mit dem Testsignalgenerator (8) in einen Stromkreis geschaltet ist.

17. Sensorbaustein (1) nach einem der Ansprüche 9 bis 16, **dadurch gekennzeichnet, dass** der Sensor (2) ein Magnetfeldsensor ist und eine Hallplatte (3) aufweist, die zumindest einen ersten Anschlusskontakt (4a), einen zweiten Anschlusskontakt (4b), einen dritten Anschlusskontakt (4c) und einen vierten Anschlusskontakt (4d) aufweist die voneinander beabstandet sind, dass der erste Anschlusskontakt (4a) und der dritte Anschlusskontakt (4c) zum Einspeisen eines Messstroms in die Hallplatte (3) mit einer Messstromquelle (5) verbunden sind, und dass der zweite Anschlusskontakt (4b) und der vierte Anschlusskontakt (4d) zum Abgreifen einer quer zu dem Messstrom ausgerichteten Hallspannung mit einem Spannungsmesser und zum Anlegen des Testsignals mit Testsignalanschlüssen des analogen Testsignalgenerators (8) verbunden sind.

## Claims

1. Method for monitoring the function of a sensor module (1) comprising a sensor (2), by means of which a measurement signal for a physical magnitude to be detected is produced and applied to an output terminal (9) in unchanged form or, after carrying out at least one linear signal processing step and/or at least one non-linear signal processing step, in processed form, **characterised in that** a test signal is produced, the spectrum of which lies substantially outside the spectrum of the measurement signal, that the test signal is fed to a point in the sensor (2) from which if the sensor (2) is functionally capable it passes to the output terminal (9) in unchanged form or, after carrying out the at least one linear signal processing step, in processed form, and in an output signal present thereat is additively superimposed on the unchanged or processed measurement signal, that the output signal is compared with the test signal and a diagnostic signal is produced which indicates whether the test signal is contained in the output signal and that the test signal is filtered out of the output signal and the residual signal is applied as measurement signal to a measurement signal output (17) of the sensor module (1).

2. Method according to claim 1, **characterised in that** the measurement signal and the test signal are analog signals which are converted preferably by sigma-delta modulation into a digital output signal, which provides a digital test signal corresponding with the analog test signal and is correlated with the digital output signal, and that the diagnostic signal is produced in dependence on the result of the correlation.

3. Method according to claim 2, **characterised in that** the test signal is removed from the output signal by decimation filtering, that the transfer function of the decimation filtering has zero points and that the spectrum of the analog test signal has local maxima corresponding with the zero points.

4. Method according to any one of claims 1 to 3, **characterised in that** the analog test signal is a square-wave signal.

5. Method according to any one of claims 1 to 4, **characterised in that** the test signal is fed to a point in the sensor (2) from which it passes to a sensor output (6a) only if the sensor (2) is functionally capable and in a sensor signal present thereat is additively superimposed on the measurement signal, that the test signal is removed from the thus-obtained sensor signal and the at least one non-linear signal processing step is carried out with the residual signal so as to provide the measurement signal in the processed form, that the test signal is additively superimposed on the thus-obtained, processed measurement signal and that the superimposition signal formed in this manner is applied to the output terminal (9).

6. Method according to any one of claims 1 to 5, **characterised in that** the at least one non-linear signal processing step comprises a trigonometric operation particularly an arctan operation.

7. Method according to any one of claims 1 to 6, **characterised in that** the sensor (2) comprises a sensor region, which is sensitive to the physical magnitude and at which an electrical voltage dependent on the physical magnitude is present as measurement signal, and that the test signal is an electrical current which is supplied to the sensor (2) in such a manner that it produces a voltage drop at the sensor region.

8. Method according to any one of claims 1 to 7, **characterised in that** the physical magnitude is a magnet field.

9. Sensor module (1), which comprises a sensor (2) with a sensor output (6a) for output of a measurement signal for a physical magnitude, wherein the sensor output (6a) is connected with an output terminal (9) directly or by way of at least one signal processing stage provided for processing the measurement signal, **characterised in that** the sensor module (1) has a test signal generator (8) for producing a test signal, a spectrum of which lies substantially outside the spectrum of the measurement signal, that the test signal generator (8) is so coupled with the sensor (2) that the test signal passes to the output terminal (9) only if the sensor (2) is functionally capable and is there additively superimposed on the measurement signal or the processed measurement signal, that connected with the output terminal (9) is a diagnostic device (10) comprising means for producing a diagnostic signal which indicates whether the test signal is present at the output terminal (9) and that the output terminal (9) is connected with a measurement signal output (17) of the sensor module (1) by way of a filter blocking the test signal.

10. Sensor module (1) according to claim 9, **characterised in that** the sensor output (6a) is arranged for issue of an analog sensor output signal and the test signal generator (8) for producing an analog test signal, that the sensor output (6a) is connected with the output terminal (9) by way of an analog-to-digital converter (7), particularly a sigma-delta converter, and that the diagnostic device (10) comprises a test signal generator (12) for producing a digital test signal, which corresponds with the analog test signal, and a correlation device which is connected by a first correlation input with a converter output of the analog-to-digital converter (7) and by a second correlation input with the digital test signal generator (12).

11. Sensor module (1) according to claim 10, **characterised in that** the diagnostic device (10) comprises a comparator (14) which for producing a diagnostic signal is connected by a first comparator input with an output of the correlation device (11) and by a second comparator input with a reference value transmitter (18) for a constant reference signal.

12. Sensor module (1) according to claim 10 or 11, **characterised in that** the filter is constructed as a decimation filter (16), the transfer function of which has zero points, and that the spectrum of the analog test signal has lower maxima corresponding with the zero points.

13. Sensor module (1) according to any one of claims 9 to 12, **characterised in that** the sensor output (6a) is connected with a first input (21 a) of a subtraction element (20) directly or by way of a linear signal processing stage (19), that a second input (21 b) of the subtraction element (20) is connected with a terminal for the test signal, that an output (22) of the subtraction element (20) is connected with a first input (24a) of an addition element (25) by way of a non-linear signal processing stage (23), that a second input (24b) of the addition element (25) is connected with the terminal for the test signal and that the output of the addition element (25) forms the output terminal (9) or is connected therewith by way of a further signal processing stage.

14. Sensor module (1) according to any one of claims 9 to 13, **characterised in that** the non-linear signal processing stage (23) is constructed for carrying out a trigonometric operation, particularly for carrying out an arctan operation.

15. Sensor module (1) according to any one of claims 9 to 14, **characterised in that** the test signal generator (8) is a square-wave signal generator.

16. Sensor module (1) according to any one of claims 9 to 15, **characterised in that** the test signal generator (8) is constructed as a current source, that the sensor (2) has a sensor region sensitive to the physical magnitude, that this sensor region has an electrical resistance and that the sensor region is connected in a circuit with the test signal generator (8).

17. Sensor module (1) according to any one of claims 9 to 16, **characterised in that** the sensor (2) comprises a magnetic field sensor and a Hall plate (3), which comprises at least one first terminal contact (4a), second terminal contact (4b), third terminal contact (4c) and fourth terminal contact (4d), which are spaced from one another, that the first terminal contact (4a) and the third terminal contact (4c) are connected with a measurement current source (5) for feeding a measurement current to the Hall plate (3) and that the second terminal contact (4b) and the fourth terminal contact (4d) are connected with a voltmeter for tapping a Hall voltage oriented transversely to the measurement current and with test signal terminals of the analog test signal generator (8) for application of the test signal.

## Revendications

1. Procédé de surveillance du fonctionnement d'un élément de détection (1), qui présente un détecteur (2) au moyen duquel on produit un signal de mesure pour une grandeur physique à déterminer et on l'applique sous forme inchangée ou - après avoir exécuté au moins une opération linéaire de traitement de signal et/ou au moins une opération non linéaire de traitement de signal - sous forme traitée à une borne de sortie (9), **caractérisé en ce que** l'on produit un signal de test dont le spectre se situe essentiellement à l'extérieur du spectre du signal de mesure, **en ce que** l'on applique le signal de test au détecteur (2) à un endroit d'où il n'arrive à la borne de sortie (9) sous forme inchangée ou - après avoir exécuté ladite au moins une opération linéaire de traitement de signal - que si le détecteur (2) est en état de fonctionner et on le superpose par addition au signal de mesure inchangé ou traité en un signal de sortie présent à cette borne, **en ce que** l'on compare le signal de sortie avec le signal de test et on produit un signal de diagnostic qui indique si le signal de test est contenu dans le signal de sortie, et **en ce que** l'on filtre le signal de test hors du signal de sortie et on applique le signal restant comme signal de mesure à une sortie de signal de mesure (17) de l'élément de détection (1).

2. Procédé selon la revendication 1, **caractérisé en ce que** le signal de mesure et le signal de test sont des signaux analogiques, qui sont convertis de préférence par une modulation sigma-delta en un signal numérique, qui fournit un signal de test numérique correspondant au signal de test analogique et qui est corrélé au signal de sortie numérique, et **en ce que** l'on produit le signal de diagnostic en fonction du résultat de la corrélation.

3. Procédé selon la revendication 2, **caractérisé en ce que** l'on élimine le signal de test hors du signal de sortie par un filtrage de décimation, **en ce que** la fonction de transfert du filtrage de décimation présente des points zéro, et **en ce que** le spectre du signal de test analogique présente des maxima locaux, qui coïncident avec les points zéro.

4. Procédé selon l'une quelconque des revendications 1 à 3, **caractérisé en ce que** le signal de test analogique est un signal rectangulaire.

5. Procédé selon l'une quelconque des revendications 1 à 4, **caractérisé en ce que** l'on applique le signal de test au détecteur (2) à un endroit d'où il n'arrive à une sortie de détecteur (6a) que si le détecteur (2) est en état de fonctionner et on le superpose par addition au signal de mesure en un signal de détecteur présent à cette sortie, **en ce que** l'on élimine le signal de test hors du signal de détecteur ainsi obtenu et on effectue ladite au moins une opération non linéaire de traitement de signal avec le signal restant afin de fournir le signal de mesure dans la forme traitée, **en ce que** l'on superpose par addition le signal de mesure traité obtenu au signal de test et **en ce que** l'on applique le signal de superposition formé de cette manière à la borne de sortie (9).

6. Procédé selon l'une quelconque des revendications 1 à 5, **caractérisé en ce que** ladite au moins une opération non linéaire de traitement de signal comprend une opération trigonométrique, en particulier une opération en arctangente.

7. Procédé selon l'une quelconque des revendications 1 à 6, **caractérisé en ce que** le détecteur (2) présente une plage de détection sensible à la grandeur physique, à laquelle une tension électrique dépendant de la grandeur physique est présente comme signal de mesure et **en ce que** le signal de test est un courant électrique, que l'on applique au détecteur (2) d'une manière telle qu'il provoque une chute de tension à la plage de détection.

8. Procédé selon l'une quelconque des revendications 1 à 7, **caractérisé en ce que** la grandeur physique est un champ magnétique.

9. Élément de détection (1) qui présente un détecteur (2) avec une sortie de détecteur (6a) pour l'émission d'un signal de mesure pour une grandeur physique, dans lequel la sortie de détecteur (6a) est reliée directement ou par l'intermédiaire d'au moins un étage de traitement de signal prévu pour le traitement du signal de mesure à une borne de sortie (9), **caractérisé en ce que** l'élément de détection (1) comporte un générateur de signal de test (8) pour la production d'un signal de test, dont le spectre se situe essentiellement à l'extérieur du spectre du signal de mesure, **en ce que** le générateur de signal de test (8) est couplé avec le détecteur (2) d'une manière telle que le signal de test n'arrive à la borne de sortie (9) que si le détecteur (2) est en état de fonctionner et il y est superposé par addition au signal de mesure ou au signal de mesure traité, **en ce qu'**un dispositif de diagnostic (10) est relié à la borne de sortie (9), lequel présente des moyens pour produire un signal de diagnostic qui indique si le signal de test est présent à la borne de sortie (9), et **en ce que** la borne de sortie (9) est reliée à une sortie de signal de mesure (17) de l'élément de détection (1) par l'intermédiaire d'un filtre bloquant le signal de test.

10. Élément de détection (1) selon la revendication 9, **caractérisé en ce que** la sortie de détecteur (6a) est conçue pour l'émission d'un signal de sortie de détecteur analogique et le générateur de signal de test (8) est conçu pour l'émission d'un signal de test analogique, **en ce que** la sortie de détecteur (6a) est reliée à la borne de sortie (9) par l'intermédiaire d'un convertisseur analogique-numérique, en particulier un convertisseur sigma-delta, et ce que le dispositif de diagnostic (10) présente un générateur de signal de test numérique (12) pour produire un signal de test numérique correspondant au signal de test analogique et un dispositif de corrélation (11), qui est relié par une première entrée de corrélation à une sortie de convertisseur du convertisseur analogique-numérique (7) et par une deuxième entrée de corrélation au générateur de signal de test numérique (12).

11. Élément de détection (1) selon la revendication 10, **caractérisé en ce que** le dispositif de diagnostic (10) présente un comparateur (14), qui est relié par une première entrée de comparateur à une sortie du dispositif de corrélation (11) et par une deuxième entrée de comparateur à un générateur de valeur de référence (18) pour un signal de référence constant, afin de produire un signal de diagnostic.

12. Élément de détection (1) selon la revendication 10 ou 11, **caractérisé en ce que** le filtre est conçu comme un filtre de décimation (16), dont la fonction de transfert présente des points zéro, et **en ce que** le spectre du signal de test analogique présente des maxima locaux, qui coïncident avec les points zéro.

13. Élément de détection (1) selon l'une quelconque des revendications 9 à 12, **caractérisé en ce que** la sortie de détecteur (6a) est raccordée directement ou par l'intermédiaire d'un étage de traitement linéaire de signal (19) à une première entrée (24a) d'un élément de soustraction (20), **en ce qu'**une deuxième entrée (21b) de l'élément de soustraction (20) est raccordée à une borne pour le signal de test, **en ce qu'**une sortie (22) de l'élément de soustraction (20) est reliée à une première entrée (24a) d'un élément d'addition (25) par l'intermédiaire d'un étage de traitement non linéaire de signal (23), **en ce qu'**une deuxième entrée (24b) de l'élément d'addition (25) est reliée à la borne pour le signal de test, et **en ce que** la sortie de l'élément d'addition (25) forme la borne de sortie (9) ou est reliée à celle-ci par l'intermédiaire d'un étage supplémentaire de traitement de signal.

14. Élément de détection (1) selon l'une quelconque des revendications 9 à 13, **caractérisé en ce que** l'étage de traitement non linéaire de signal (23) est conçu pour effectuer une opération trigonométrique, en particulier pour effectuer une opération en arctangente.

15. Élément de détection (1) selon l'une quelconque des revendications 9 à 14, **caractérisé en ce que** le générateur de signal de test (8) est un générateur de signal rectangulaire.

16. Elément de détection (1) selon l'une quelconque des revendications 9 à 15, **caractérisé en ce que** le générateur de signal de test (8) est configuré comme une source de courant, **en ce que** le détecteur (2) présente une plage de détection sensible à la grandeur physique, **en ce que** cette plage de détection présente une résistance électrique, et **en ce que** la plage de détection est connectée en un circuit de courant avec le générateur de signal de test (8).

17. Élément de détection (1) selon l'une quelconque des revendications 9 à 16, **caractérisé en ce que** le détecteur (2) est un détecteur de champ magnétique et présente une plaque de Hall (3), qui présente au moins un premier contact de raccordement (4a), un deuxième contact de raccordement (4b), un troisième contact de raccordement (4c) et un quatrième contact de raccordement (4d), qui sont espacés l'un de l'autre, **en ce que** le premier contact de raccordement (4a) et le troisième contact de raccordement (4c) sont reliés à une source de courant de mesure (5) de façon à appliquer un courant de mesure à la plaque de
Hall (3), et **en ce que** le deuxième contact de raccordement (4b) et le quatrième contact de raccordement (4d) sont reliés à un voltmètre pour relever la tension de Hall orientée transversalement au courant de mesure et à des bornes de signal de mesure du générateur de signal de test analogique (8) pour appliquer le signal de test.
